# EUROPEAN PATENT SPECIFICATION

(11) **EP 0 393 776 B1**
(45) Date of publication and mention of the grant of the patent: **02.11.1995**
(21) Application number: 90200926.5
(22) Date of filing: 13.04.1990
(51) Int. Cl.: G01N 30/86, G01N 30/34

(54) **Liquid chromatography**
Flüssigkeitschromatographie
Chromatographie en phase liquide

(30) Priority: 20.04.1989 GB 8908934
(43) Date of publication of application: 24.10.1990
(73) Proprietor: PHILIPS ELECTRONICS UK LIMITED, Croydon CR9 3QR (GB); Philips Electronics N.V., 5621 BA Eindhoven (NL)
(72) Inventor: Lynch, Roderick John, c/o Philips Scientifc, Cambridge, CB1 2PX (GB); Measures, Gregory John, c/o Philips Scientifc, Cambridge, CB1 2PX (GB); Perkins, Charles Vincent, c/o Philips Scientifc, Cambridge, CB1 2PX (GB)
(74) Representative: Andrews, Arthur Stanley

(56) References cited:
- EP-A- 0 175 925
- EP-A- 0 403 680
- US-A- 4 468 331
- US-A- 4 719 017
- CHROMATOGRAPHIA vol. 29, no. 1/2, January 1990, pages 79 - 89; NAISH-CHAMBERLAIN et al.: "evaluation of a complete hplc solvent optimization system involving piece- wise quadratic modelling"
- TRAC, TRENDS IN ANALYTICAL CHEMISTRY. vol. 6, no. 5, May 1987, CAMBRIDGE GB pages 106 - 111; SNYDER ET AL.: 'high-performance liquid chromatographic method-development using computer simulation '
- CHROMATOGRAPHIA vol. 24, 1987, pages 691 - 695; BRIDGE ET AL.: 'an expert system for eluent optimisation in liquid chromatography with photodiode array detection '

## Description

The invention relates to liquid chromatography apparatus and to a method of optimising solvent compositions for the analysis of a sample by liquid chromatography.

Chromatography has been used for many years to separate and measure the concentration of the constituents of complex mixtures. To analyse a sample in a liquid chromatograph apparatus an unknown sample is injected into a separating column together with a solvent (or mobile phase) or mixture of solvents. A detector at the far end of the column detects the presence of the constituents as they emerge or elute from the column. A chromatographer uses a plot of the detector output against time, known as a chromatogram, to analyse the unknown sample.

For example, an analyst may wish to know the concentration of a given pesticide in water or a given pharmaceutical drug in the bloodstream of a patient. In that case a known volume of the water or of the blood would be injected into a separating column and the constituent parts including the pesticide or the drug would be separately eluted and can be detected. By knowing when the particular constituents should elute their presence can be detected and quantative measurement may be made on the peaks.

Such a method of operation is very useful when the constituents of the sample are known. However, when the sample is an unknown, the chromatogram produced is more difficult to interpret. Further, research has shown that the separation of unknowns into their constituent parts in a liquid chromatograph is not always possible with a given multi-component solvent composition. As a result, analysts have varied the concentrations of the constituents of the solvent and have used solvents having up to four different major constituents enabling the separation of more kinds of unknowns into their component parts, provided a proper solvent composition can be selected. However, if an improper solvent composition is used, two or more components may co-elute, thereby producing a chromatogram with insufficient resolution. Thus chromatographers are left with the very time-consuming problem of randomly experimenting with the different solvent compositions and evaluating the chromatogram for each such experiment to determine which one is best. Typically, a chromatographer may perform a large number of experiments on a given unknown sample, each experiment being done with a different solvent composition in the column. A chromatogram is produced from each experiment. For a typical unknown, the chromatographer may perform many experiments before he discovers a set of conditions which are acceptable but, even so, perhaps not ideal for his purposes. Some of the chromatograms are easily discarded as being unusable but evaluating the remaining chromatograms to determine which is the most usable is very difficult. This task becomes even more difficult as the number of experiments increases as is required when three or four solvents are used in the column. Without a system and protocol it becomes highly unlikely that an optimum separation will be achieved by trial and error.

This problem has been addressed in a paper by Haleem J. Issaq entitled Computer-assisted HPLC which was published in American Laboratory, February 1983, pp 41-46. The paper describes a method based on statistical calculations whereby peak pair resolutions in 5 to 10 chromatographic runs using a combination of two or three pure or mixed solvents are plotted versus mobile phase composition. If no peak crossover takes place the resolution between each pair is used. If peak reversal does occur, the resolution between all peaks is calculated and used in determining the optimum mobile phase. The resulting overlapping resolution mapping (ORM) plots of each pair are then generated by the computer and indicate the regions where resolutions are above a level predetermined by the analyst. The union of all peak pair ORM plots, handled automatically by the computers, will give one plot indicating the region where all peak pair resolutions are above a predetermined level.

Since resolution versus mobile phase composition is used to generate the ORM plots, the analyst can program the computer to predict and print in the form of a table the peak pair resolutions for any desired mobile phase composition.

Retention times may be predicted if a plot of retention time, instead of resolution, is plotted versus mobile phase composition for each component in such mobile phase. This will be of value in showing how long it will take for the last component to elute from the column. In cases where resolution and not retention time is predicted, the analyst does not know how long the chromatographic run will take.

It is an object of the invention to enable provision of a method of and apparatus for aiding a chromatographer in optimising solvent compositions for a given chromatographic separation.

The invention provides a method of optimising solvent compositions for the analysis of a sample by liquid chromatography comprising the steps of:
a) selecting a plurality of solvent compositions,
b) performing a plurality of chromatographic analyses using each of the selected solvent compositions,
c) storing the chromatograms produced,
d) modelling the retention time of each peak with changing solvent composition,
e) modelling a quality of the chromatograms across a surface
f) displaying the modelled quality across the surface,
g) selecting a point on the surface, and
h) displaying a predicted chromatogram corresponding to the selected point.

The invention allows the chromatographer to view a display representing a quality of the chromatograms and to select any point on the display and produce a predicted chromatogram using the solvent compositon defined by that selected point. This provides a convenient way of testing the results produced by selecting a given solvent composition. Thus a chromatographer can quickly and simply select promising positions on the surface and have the predicted chromatogram simultaneously displayed.

The defined solvent compositions may lie on an isoeluotropic plane. This gives the advantage of a relatively constant separation line whichever solvent composition is selected for the sample measurement.

The quality of the modelled chromatograms may be displayed as a contour map. This enables easy selection of any point on the surface and provides an easily viewed representation of quality across the surface.

As an alternative to the display of the quality by a contour map it may be displayed as a response surface, that is a relief representation. Examples of such response surfaces are shown in a paper by P.J. Naish-Chamberlain and R.J. Lynch entitled "Evaluation of a Complete HPLC Solvent Optimisation System Involving Piece-Wise Quadratic Modelling" published in Chromatographia, Vol. 29, No. 1/2, January 1990, at pages 79-89. Such a representation, however, does not allow as easy a selection of points on the surface as a contour map due to the limitations of using a two-dimensional representation of a three dimensional surface.

The predicted chromatograph may be a line diagram showing the predicted peak positions. This gives a simple display producing a good indication of the quality of the chromatograph likely to be produced.

Various quality criteria may be used amongst which are: best overall separation of the peaks, best separation of a selected subset of the peaks, the time required for separation one(s) of all or a selected subset of the peaks.

Various other quality criteria could be mapped and used, for example any of those disclosed by P.J. Schoenmakers et al in Journal of Liquid Chromatography 10 (1987) pp 1865-1886; Chromatographia 24 (1987) pp 579-587; Journal of Chromatography 458 (1988) pp 358-370; or as disclosed by P.J. Schoenmakers in "Optimisation of Chromatic Selectivity" published by Elsevier, Amsterdam, 1986.

In step b) ten analyses may be performed. The number of analyses is chosen so as to obtain a sufficient precision of modelling without requiring an excessive number of analyses. Thus the greater the number of analyses the more precise it is possible to make the model but the longer it takes to carry out these analyses.

The peaks in each chromatogram may be identified and tracked by comparing their spectra with those of the peaks of a reference chromatogram. This is a convenient method of identification if a diode array detector is used. Other peak characteristics, for example area, time of elution, may be used either alternatively or additonally, singly or in combination to identify the peaks where these characteristics are available.

The invention further provides liquid chromatograph apparatus comprising:
a) a plurality of solvent sources;
b) solvent proportioning and pumping means;
c) a separating column;
d) sample input means;
e) a detector;
f) means for displaying a chromatogram;
g) control means for enabling the solvent composition for a given sample separation to be optimised, said control means comprising;
h) means for receiving and storing data representing the available solvents;
i) means for sequentially selecting solvent compositions using the available solvents and performing a chromatographic separation using the selected solvent composition;
j) means for storing each of the sequentially produced chromatograms;
k) means for detecting and labelling each of the peaks of each of the chromatograms;
l) means for calculating from the chromatograms stored the chromatographic peak positions over a surface;
m) means for displaying a chromatographic quality across the surface; and
n) means for selecting a desired point on the surface and displaying a predicted chromatogram simultaneously with the display of chromatographic quality.

Embodiments of the invention will now be described, by way of example, with reference to the accompanying drawings, in which:
Figure 1 shows in diagrammatic form liquid chromatograph apparatus according to the invention,
Figure 2 shows ten points on an isoeluotropic triangle at which a chromatographic analysis is made in order to construct a rentention model.
Figure 3 is a flow diagram illustrating a method according to the invention of optimising solvent compositions for the analysis of a sample by liquid chromatography, and
Figures 4 to 7 show displays of contour maps and diagrammatic chromatograms which are displayed simultaneously on the display unit of the microcomputer forming part of the chromatograph apparatus of Figure 1.

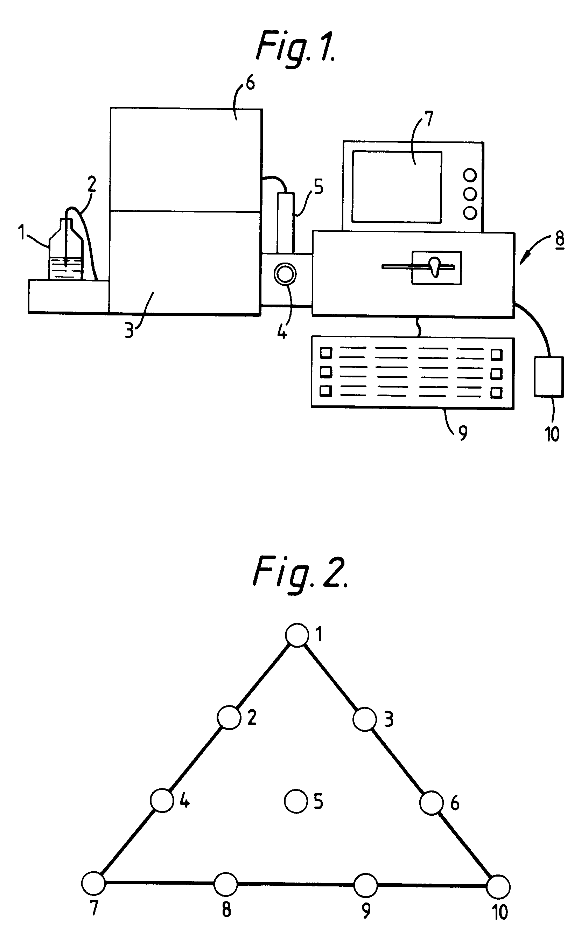

Figure 1 shows liquid chromatograph apparatus according to the invention and comprises a plurality of solvent sources one of which is shown as container 1 which is connected via a tube 2 to solvent proportioning and pumping means 3 which may be formed for example by a Philips Scientific PU4100 pump. The outlet of the pump is connected via a sample injector 4 forming the sample input means to the inlet of a separating column 5. The outlet of the column 5 is connected to the input of a diode array detector 6 which may be that sold by Philips Scientific under the type number PU4120. The resulting chromatogram may be displayed on a VDU 7 or a hard copy may be obtained on a chart recorder or plotter (not shown). The control means for enabling the solvent composition for a given sample separation to be optimised is formed by a microcomputer 8 which includes a key board 9 and mouse 10 and may conventiently be formed by a Philips Scientific PU6003 diode array data system. It uses a plurality of chromatograms, for example ten, run under selected conditions and stored as data representing the chromatograms including peak shapes and peak spectra where a diode-array detector is used.

Optimisation procedures can be classified as either sequential or interpretive. Sequential methods are typified by the commonly used Simplex procedure, with each set of chromatographic conditions being decided on the basis of a chromatographic response function from typically the previous three experiments. The problems with this approach include finding of a local optimum, rather than the global optimum, and the large number of experiments required, typically 25-30.

Interpretive methods involve the modelling of the retention times of the individual components, and consequently labelling of the peaks in each of the chromatograms used for modelling is necessary. An early example of the interpretive approach was the Sentinel system from Dupont, but this did not include peak labelling.

The software used in the control means uses an interpretive method and is built up of three distinct parts which perform the three functions of peak finding, peak labelling, and retention modelling and optimising.

Ten sets of data taken at points on an isoeluotropic triangle as shown in Figure 2 are processed and the results used to predict the optimum chromatogram. The data for each point is loaded into memory, a chromatogram is selected as a reference chromatogram (usually a maxplot), and this is used to find the peak positions. The spectra are found for these peaks, conveniently by using a diode-array spectrometer as the detector, and are then used in peak labelling. The results of the labelling are saved in a chromatograms description file. This is a file which is progressively built up to contain the retention time and the peak size of all the peaks and is the raw data on which the model for the predicted optimum is based.

The overall process involves peak finding, peak labelling and retention modelling and optimising. Peak finding is the process of finding the positions of resolved and partially resolved peaks, and the deconvolution of overlapping peaks. Peak finding can be achieved by firstly using the second derivative of each chromatogram, either at one wavelength or from a maxplot, which is the absorbance from the diode of highest absorbance at each individual time unit when using a diode array spectrometer as the detector. The three dimensional data are then broken down into segments containing the peaks and subsequently, for each segment, using a Principal Components Analysis (PCA) (singular value decomposition) to find the eigen-values. The principal components found are known as abstract chromatograms and spectra. These are used as inputs to an Iterative Target Transformation Factor Analysis (ITTFA) which uses the found peak positions as the starting points in a reconstruction of peak profiles. The individual spectrum for each peak is also reconstructed. This is done for each of the segments in all the chromatograms.

Further information on ITTFA can be obtained from the text book "Optimisation of Chromatographic Selectivity" by P. Schoenmakers, published by Elsevier, Amsterdam, 1986 and in a paper by B.G.M. Vandeginste, W. Derks and G. Kateman, starting at page 253 in Analytica Chimica Acta, 173 (1985).

The peaks are subsequently labelled against a reference set of spectra. Spectral and peak size information can be used for the matching. The spectral matching can be based on a least squares fit between the spectra. The reference set is established from ideally one chromatogram, the best-resolved chromatogram. If this is found subsequently not to contain the full set of components in the sample, the reference set can be updated, but then relabelling in all chromatograms will be required. The labelling in each chromatogram can be achieved by looking at the correlation between each of the reconstructed spectra and the reference spectra. Peak sizes or volumes may also be matched, and in addition the possibility of peaks containing more than one component may be taken into account in the overall assignment. This allows labelling of non-deconvoluted peaks. The best overall assignment is generally selected, but manual correction could be provided for. The labelled chromatograms are used as the inputs for the retention modelling. It should be noted that the peak reference spectra could alternatively be derived from more than one chromatogram if that enabled the individual peak spectra to be more easily determined.

The model employed requires an experimental design with 10 chromatographic runs of approximately equal retention time and consequently these data points should ideally lie on or close to an isoeluotropic plane. An acceptable range of retention-times, for example k′ = 0.5-10, is determined for one binary eluent, buffer/methanol for example in reverse-phase LC, (RPLC). The two other binary eluents, buffer/acetonitrile, and buffer/tetrahydrofuran in RPLC, can be defined, from factors relating the eluotropic strengths of these organic modifiers to those of methanol. These three corner points define an isoeluotropic plane. The simplest example is then to take a regular triangular design on this plane, (see Fig. 2). However, if there is more interest in one particular area, the design does not need to be regular.

For each component, corresponding to each reference compound, a mathematical model for retention is fitted to the ten points across the isoeluotropic plane. The numbering of the points is shown in Fig. 2. The model generates a retention surface which describes the movement of peaks with changing solvent compositions. These retention surfaces are the data used for calculating the selected response function(s), at all points across the plane. A selection of response functions can be generated, the choice being dependent on for example whether minimum time of analysis, or most even spacing of peaks is required. The response function can be tailored for all peaks or for a subset of peaks, such that if specific peaks are of interest and the rest are not, an optimum can be found specifically for the analytes of interest. Optima or other interesting points can be selected, and the chromatograms can be predicted at these positions. Comparisons can be made with collected data.

It should be noted that although the model used in this particular example requires approximately equal retention time this is not a necessary restriction of the invention. Models can be constructed which will allow for unequal retention times and under these circumstances the solvent compositions used may lie anywhere within or on the surface of the solvent tetrahedron (for a maximum of four solvents). For a two solvent mixture the points lie on an edge of the tetrahedron while for a three solvent mixture the points lie on a surface of the tetrahedron.

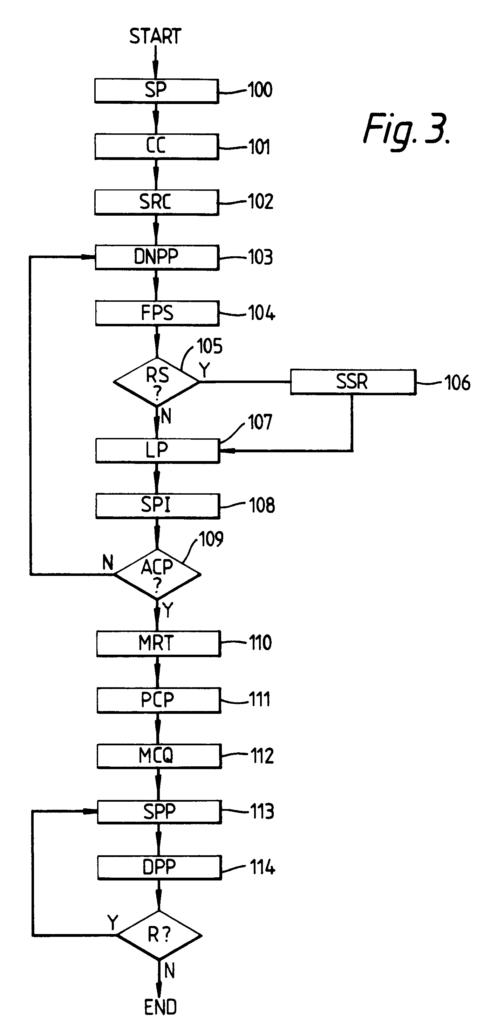

Figure 3 is a flow diagram illustrating a method according to the invention of optimising the solvent composition for the analysis of a sample by liquid chromatography.

The first step of the method represented by box 100 labelled SP is to select the desired area for the search, for example the isoeluotropic triangle shown in Figure 2. This selection is made by the chromatographer using known criteria and for further details of how to make the choice reference should be made to the book by P. Schoenmakers referenced hereinbefore. The next step represented by Box 101 labelled CC is to run analyses at each of the ten points on the isoeluotropic triangle shown in Figure 2 and to collect the resulting chromatograms. It should be noted that, although ten points are shown in Figure 2, it is not essential to the method that ten points are used. A greater number of points will enable a more precise modelling to be carried out at the expense of a greater number of experiments being needed while a lesser number of points will require fewer experiments but will also result in a less precise modelling. This may be achieved by collecting hard copies from a chart recorder or plotter or they may be read directly into memory and displayed on the VDU 7. The chromatograper then selects the reference chromatogram, represented on the flow chart by Box 102 labelled SRC. This will normally be the chromatogram having the largest number of clearly resolved peaks. The next step represented by Box 103 labelled DNPP is to determine the number and position of the peaks of the chromatogram. This can be done by a variety of methods which may for example involve mathematical deconvolution to resolve overlapping peaks or the production of the second derivative of the chromatogram to locate the positions of the peaks. Once the number and positions of the peaks have been determined, the spectra of the peaks are obtained as represented by Box 104 labelled FPS. Since a diode-array spectrometer is used as the detector and a complete spectrum is measured and stored at regular intervals, for example once per second, the spectral characteristics of each peak can be determined. The spectra may be refined by the ITTFA process.

When the position and number of peaks of the chromatogram and their spectra have been found then it is determined whether the chromatogram being considered is the reference chromatogram Box 105 labelled RS?. If this is the case, then the spectra are stored as the reference, Box 106 labelled SSR. If the chromatogram is not the reference chromatogram then the peaks of the chromatogram are identified, Box 107 labelled LP, by comparing the spectrum of each peak with those of the peaks of the reference chromatogram, it being assumed that if the spectra correlate then the peaks are of the same constituents. If two or more peaks have similar spectra making it difficult to identify individual peaks with certainty, other peak characteristics may also be compared, for example "peak volume" i.e. area under the spectrum x elution profile. When the peaks have been identified each is stored with its retention time and the solvent composition, Box 108 labelled SPI.

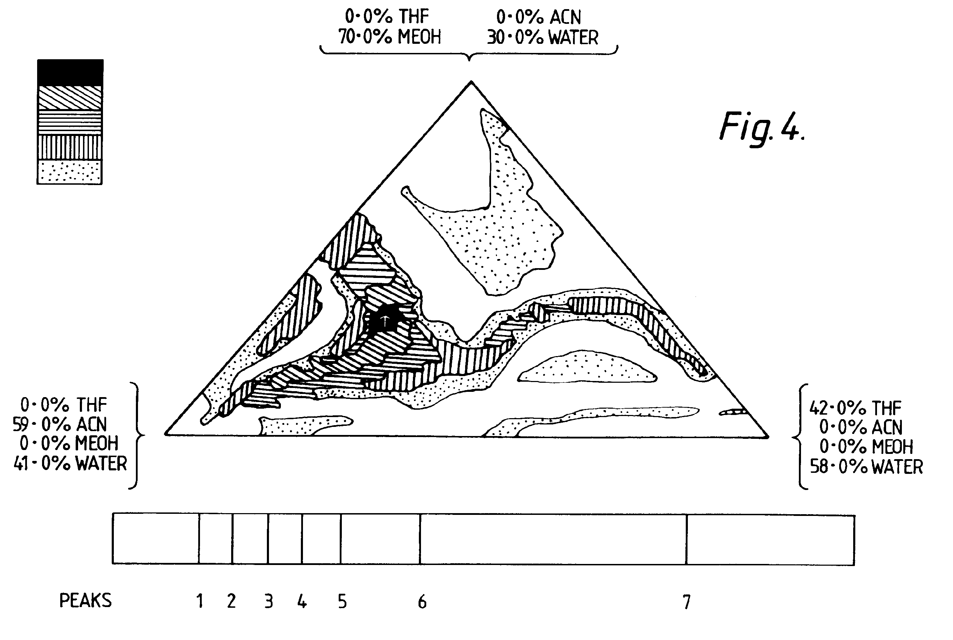

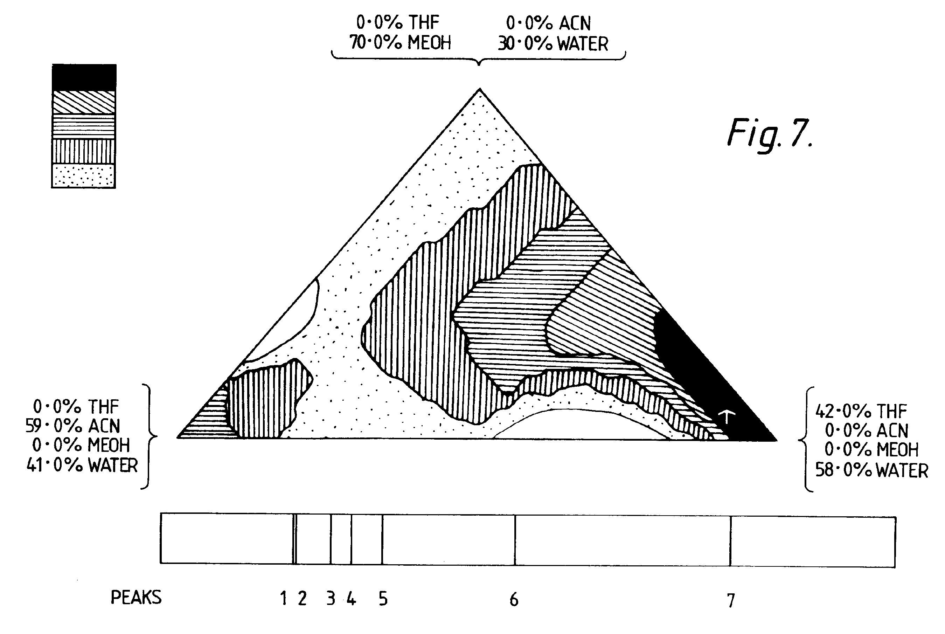

If further chromatograms are to be processed then the procedure reverts to Box 103 as shown by decision process 109 labelled ACP?. If all the chromatograms have been processed then the retention time for each peak is modelled across the isoeluotropic triangle, Box 110 labelled MRT. The next step, Box 111 labelled PCP, is to predict the chromatograms across the isoeluotropic triangle. The chromatogram quality is then modelled across the isoeluotropic triangle and is displayed in the form of contours on the surface of the triangle. This process is represented by Box 112 labelled MCQ. Various criteria may be used to assess quality, for example one or more of the resolution values of pairs of successive peaks, the time required for separation, the lowest resolution value occurring in the chromatogram, or any of those disclosed in the publications of P.J. Schoenmakers et al referred to herein. Figures 4 to 7 show examples of the resulting displays of the quality contours on the isoeluotropic triangle. Figures 4 to 6 show the case where the quality criterion is the maximum overall resolution of the peaks while in Figure 7 the quality criterion is the maximum resolution of peak 6 regardless of the resolution of pairs of insignificant peaks.

The chromatographer now has a visual indication of the quality, according to the selected criteria, of a separation displayed on the VDU 7. It is now possible to select a point on the triangle, for example by means of the mouse 10 and a cursor on the display. When this point is selected, as represented by Box 113 labelled SPP, a line diagram of the position of the chromatogram peaks corresponding to an analysis using the selected solvent composition is produced on the display concurrently with the contour map on the triangle, Box 114 labelled DPP. If the chromatographer is not satisfied for any reason with the predicted chromatogram for the selected solvent composition the process can be repeated, as indicated by Box 115 labelled R?, and a new predicted chromatogram displayed. While in this particular embodiment only the peak positions are displayed, it would be possible to display a predicted chromatogram showing peak heights and separations to give the chromatographer further assistance

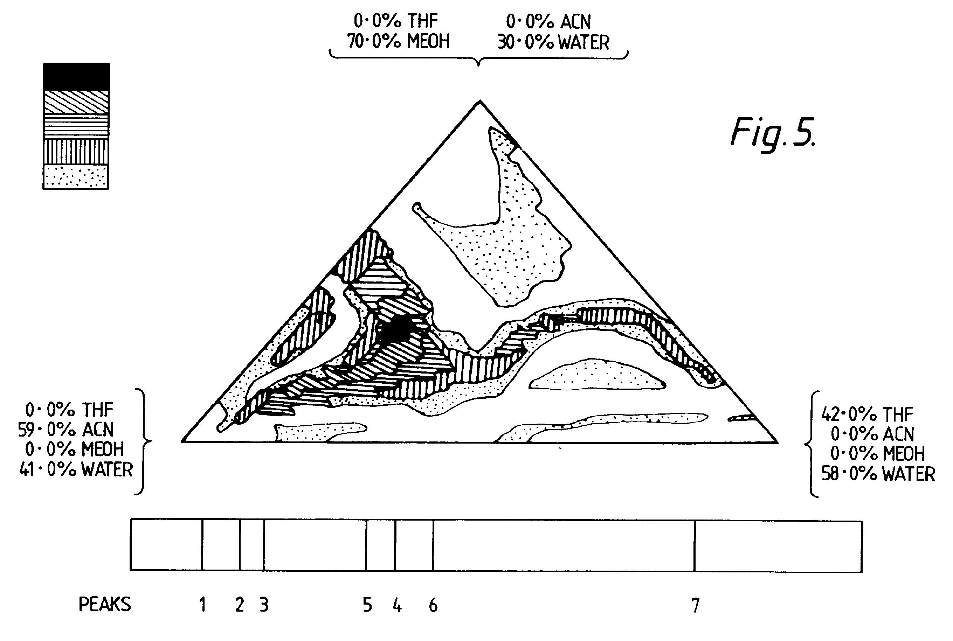

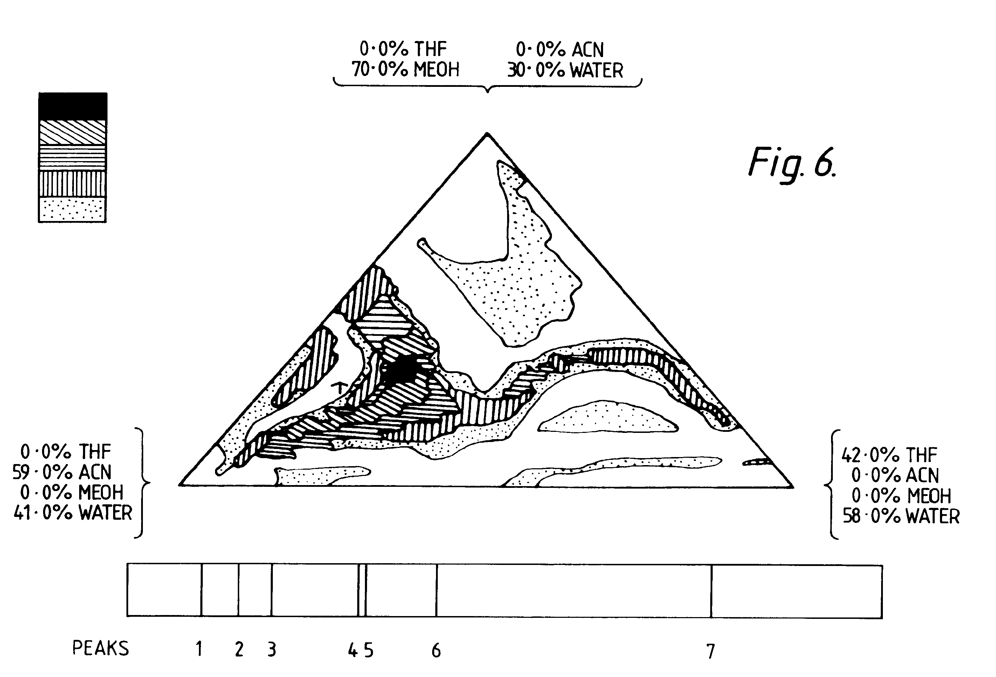

Figure 4 shows the predicted chromatogram when a point (MEOH-22.7%, ACN-28.0%, THF8.4%) within the highest quality contour is selected and it can be seen that an optimum separation has been achieved. Figure 5 shows the predicted chromatogram when a point (MEOH-24.1%, ACN-36.5%, THF 1.6%) within a local maximum is selected as opposed to Figure 4 in which the global maximum was selected. In this case it can be seen that the peaks are reasonably separated though not as optimally as in Figure 4 but it should also be noted that peaks 4 and 5 have changed order of elution. Thus the feature of labelling the peaks using spectra from the diode array has proved its usefulness. However, if a diode array detector is not available the peak identification may be carried out using other peak characteristics. Figure 6 shows the predicted chromatogram when a point (MEOH-21.4%, ACN-34.5%, THF-4/6%) is selected where a low quality is expected according to the criteria under which the contour map was constructed. However, it can be seen that this particular solvent composition would be satisfactory if the chromatographer was not interested in peaks 4 and 5. Figure 7 shows the contour map constructed according to the criterion that peak 6 should have the maximum resolution. As can be see from the predicted chromatogram displayed corresponding to a selected point (MEOH-7.0%, ACN-1.5%, THF-36.7%) peak 6 is well separated for the selected solvent composition but peaks 1 and 2, for example, are not.

While the predicted chromatograms shown in Figures 4 to 7 are in the form of line diagrams it is possible using the ITTFA process to construct a true predicted chromatogram giving the peak profiles. This has the advantage of giving a more comprehensive display to the chromatographer allowing better choice of solvent composition, for example if sharp peaks are predicted their separation may be smaller than that of broader peaks to give the same resolution. It does, however, require more processing of the data in order to produce the predictions of the peak profiles. Further it is possible to display simultaneously a plurality of predicted chromatograms corresponding to a plurality of selected points on the contour map. The chromatograms may conveniently be displayed one above the other on the display above, below, or to one side of the contour map. Clearly the particular arrangement of the predicted chromatogram(s) and the contour map is a matter of choosing the most convenient arrangement and the arrangement shown in Figures 4 to 7 is only one among many possibilities.

It is also possible to label the peaks by the chemical compounds they contain in certain circumstances. These compounds can be identified for example from their characteristic UV Spectrum, from comparing the time taken for the peak to elute from the column as compared with a sample of the pure compound or by any other technique which analysts use to identify the peak compound. This can be done when the starting materials for example of a pharmaceutical substance are known. An intermediate state where some peaks are assigned numbers and some labelled with the known compound is also possible. The labels may be displayed adjacent to the relevant peaks on the displayed chromatogram or as a separate table i.e. the peaks are numbered and the corresponding compounds listed in a separately displayed table against the respective numbers.

From reading the present disclosure, other modifications will be apparent to persons skilled in the art and which may be used instead of liquid chromatograph apparatus and component parts thereof and which may be used instead of or in addition to features already described herein. Although claims have been formulated in this application to particular combinations of features, it should be understood that the scope of the disclosure of the present appplication is defined by the appended claims.

## Claims

1. A method of optimising solvent compositions for the analysis of a sample by liquid chromatography comprising the steps of:
a) defining a plurality of solvent compositions,
b) performing a plurality of chromatographic analyses using the defined solvent compositions,
c) storing the chromatograms produced,
d) modelling the retention time of each peak with changing solvent composition,
e) modelling a quality of the chromatograms across a surface
f) displaying the modelled quality across the surface,
g) selecting a point on the surface, and
h) displaying a predicted chromatogram corresponding to the selected point.

2. A method as claimed in Claim 1, comprising the step of selecting the defined solvents to lie on an isoeluotropic plane.

3. A method as claimed in Claim 1 or Claim 2 comprising the step of causing the quality of the modelled chromatograms to be displayed as a contour map.

4. A method as claimed in any of claims 1 to 3, comprising the step of producing the chromatogram as a line diagram showing the predicted peak positions.

5. A method as claimed in any of claims 1 to 4, comprising the step of selecting the quality criterion as the best overall separation of the peaks.

6. A method as claimed in any of claims 1 to 4, comprising the step of selecting the quality criterion as the best overall separation of a selected subset of the peak(s).

7. A method as claimed in any of claims 1 to 4, comprising the step of selecting the quality criterion as the time taken for the selected peak(s) to be separated.

8. A method as claimed in any preceding claims in which in step b) ten analyses are performed.

9. A method as claimed in any preceding Claim in which the peaks in each chromatogram are identified and tracked by comparing their spectra with those of a set of reference peaks.

10. A method as claimed in Claim 8 in which the reference peaks are derived from one or more of the plurality of chromatograms stored in step c).

11. Liquid chromatograph apparatus comprising:
a) a plurality of solvent sources;
b) solvent proportioning and pumping means;
c) a separating column;
d) sample input means;
e) a detector;
f) means for displaying a chromatogram; and
g) control means for enabling the solvent composition for a given sample separation to be optimised, said control means comprising;
h) means for receiving and storing data representing the available solvents;
i) means for sequentially selecting solvent compositions using the available solvents and performing a chromatographic separation using the selected solvent composition;
j) means for storing each of the sequentially produced chromatograms;
k) means for detecting and labelling each of the peaks of each of the chromatograms;
l) means for calculating from the chromatograms stored the chromatographic peak positions over a surface;
m) means for displaying a chromatographic quality across the surface; and
n) means for selecting a desired point on the surface and displaying a prediced chromatogram simultaneously with the display of chromatographic quality.

12. Apparatus as claimed in Claim 11 further comprising means for receiving and storing data representing a selected isoeluotropic plane, in which the means i) is arranged to select solvent compositions defined by selected points on the isoeluotropic plane and the means m) is arranged to display the chromatographic quality across the isoeluotropic plane.

13. Apparatus as claimed in Claim 11 or Claim 12, in which the means m) is arranged to display the chromatographic quality as a contour map.

14. Apparatus as claimed in any of Claims 11 to 13, in which the means n) is arranged to display the predicted chromatogram as a line diagram showing peak positions.

15. Apparatus as claimed in any of Claims 11 to 14, in which the detector is a diode array spectrophotometer.

16. Apparatus as claimed in any of Claims 11 to 15, in which the means n) is arranged to label one or more of the peaks of the displayed predicted chromatogram with its chemical compound.

17. Apparatus as claimed in any of Claims 11 to 16, in which the means n) is arranged to display a peak table, the peak table listing the chemical compound of one or more peaks.

## Patentansprüche

1. Verfahren zur Optimierung der Lösungsmittel-Zusammensetzungen für die Analyse einer Probe mit Hilfe der Flüssigkeitschromatographie, das die folgenden Schritte umfaßt:
a) Auswählen einer Vielzahl von Lösungsmittel-Zusammensetzungen;
b) Durchführen einer Vielzahl von chromatographischen Analysen mit jeder der gewählten Lösungsmittel-Zusammensetzungen;
c) Speichern der erstellten Chromatogramme;
d) Modellieren der Retentionszeit jedes Peaks bei sich ändernder Lösungsmittel-Zusammensetzung;
e) Modellieren einer Qualität der Chromatogramme über eine Fläche;
f) Anzeigen der modellierten Qualität über die Fläche;
g) Auswählen eines Punktes auf der Fläche und
h) Anzeigen eines vorhergesagten Chromatogramms für den gewählen Punkt.

2. Verfahren nach Anspruch 1, das den Schritt umfaßt, bei dem die definierten Lösungsmittel, die auf einer iso-eluotropischen Ebene liegen, gewählt werden.

3. Verfahren nach Anspruch 1 oder 2, das den Schritt umfaßt, bei dem die Qualität der modellierten Chromatogramme als Konturkarte dargestellt wird.

4. Verfahren nach einem der Ansprüche 1 bis 3, das den Schritt umfaßt, bei dem das Chromatogramm als Liniendiagramm erstellt wird, welches die vorhergesagten Peak-Positionen zeigt.

5. Verfahren nach einem der Ansprüche 1 bis 4, das den Schritt umfaßt, bei dem die beste Gesamttrennung der Peaks als Qualitätskriterium gewählt wird.

6. Verfahren nach einem der Ansprüche 1 bis 4, das den Schritt umfaßt, bei dem die beste Gesamttrennung einer gewählten Teilgruppe des Peaks (der Peaks) als Qualitätskriterium gewählt wird.

7. Verfahren nach einem der Ansprüche 1 bis 4, das den Schritt umfaßt, bei dem die für die Trennung der (des) gewählten Peaks benötigte Zeit als Qualitätskriterium gewählt wird.

8. Verfahren nach einem der vorhergehenden Ansprüche, bei dem in Schritt b) zehn Analysen durchgeführt werden.

9. Verfahren nach einem der vorhergehenden Ansprüche, bei dem die Peaks in jedem Chromatogramm identifiziert und zurückverfolgt werden, indem ihre Spektren mit denjenigen einer Gruppe von Referenz-Peaks verglichen werden.

10. Verfahren nach Anspruch 8, bei dem die Referenz-Peaks von einem oder mehreren der in Schritt c) gespeicherten Chromatogramme abgeleitet werden.

11. Flüssigkeitschromatographie-Gerät, das folgendes umfaßt:
a) eine Vielzahl von Lösungsmittel-Quellen;
b) Lösungsmittel-Proportionierungs- und Pumpmittel;
c) eine Trennsäule;
d) Proben-Zuführungsmittel;
e) einen Detektor;
f) Mittel zur Anzeige eines Chromatogramms;
g) Steuermittel zur Optimierung der Lösungsmittel-Zusammensetzung für eine bestimmte Probentrennung, wobei die genannten Steuermittel folgendes umfassen:
h) Mittel zum Empfangen und Speichern von Daten, die die verfügbaren Lösungsmittel darstellen;
i) Mittel zur sequentiellen Auswahl von Lösungsmittel-Zusammensetzungen unter Verwendung der verfügbaren Lösungsmittel und zur Durchführung einer chromatographischen Trennung unter Verwendung der gewählten Lösungsmittel-Zusammensetzung;
j) Mittel zum Speichern von jedem der nacheinander erzeugten Chromatogramme;
k) Mittel zum Erkennen und Kennzeichnen von jedem Peak in jedem der Chromatogramme;
l) Mittel zur Berechnung der chromatographischen Peak-Positionen über einer Fläche ausgehend von den gespeicherten Chromatogrammen;
m) Mittel zur Darstellung einer chromatographischen Qualität über die Fläche;
n) Mittel zur Auswahl eines gewünschten Punktes auf der Fläche und zur Darstellung eines vorhergesagten Chromatogramms gleichzeitig mit der Darstellung der chromatographischen Qualität.

12. Vorrichtung nach Anspruch 11, die außerdem Mittel zum Empfangen und Speichern von Daten enthält, die eine gewählte iso-eluotropische Ebene darstellen, wobei die Mittel i) so angeordnet sind, daß die durch die gewählten Punkte auf der isoeluotropischen Ebene definierten Lösungsmittel-Zusammensetzungen ausgewählt werden und die Mittel m) so angeordnet sind, daß die chromatographische Qualität über die isoeluotropische Ebene angezeigt wird.

13. Vorrichtung nach Anspruch 11 oder 12, wobei die Mittel m) so angeordnet sind, daß die chromatographische Qualität als Konturkarte angezeigt wird.

14. Vorrichtung nach einem der Ansprüche 11 bis 13, wobei die Mittel n) so angeordnet sind, daß das vorhergesagte Chromatogramm als Liniendiagramm angezeigt wird, welches die Peak-Positionen angibt.

15. Vorrichtung nach einem der Ansprüche 11 bis 14, wobei der Detektor ein Dioden-Array-Spektrophotometer ist.

16. Vorrichtung nach einem der Ansprüche 11 bis 15, wobei die Mittel n) so angeordnet sind, daß ein oder mehrere Peak(s) des angezeigten vorhergesagten Chromatogramms mit seiner/ihrer chemischen Verbindung beschriftet wird/werden.

17. Vorrichtung nach einem der Ansprüche 11 bis 16, wobei die Mittel n) so angeordnet sind, daß eine Peak-Tabelle angezeigt wird, in der die chemische Verbindung von einem oder mehreren Peak(s) aufgeführt ist.

## Revendications

1. Procédé pour optimiser les compositions de solvants en vue de l'analyse d'un échantillon par chromatographie en phase liquide, comprenant les étapes consistant à :
a) déterminer une pluralité de compositions de solvants;
b) exécuter une pluralité d'analyses chromatographiques à l'aide de chacune des compositions de solvants déterminées;
c) mémoriser les chromatogrammes produits;
d) modéliser le temps de rétention de chaque pic avec l'évolution de la composition de solvants;
e) modéliser une qualité des chromatogrammes d'un point à l'autre d'une surface;
f) afficher la qualité modélisée d'un point à l'autre de la surface;
g) sélectionner un point sur la surface, et
h) afficher un chromatogramme prédit correspondant au point sélectionné.

2. Procédé suivant la revendication 1, comprenant l'étape consistant à sélectionner les solvants définis de façon qu'ils se situent sur un plan isoéluotropique.

3. Procédé suivant la revendication 1 ou 2, comprenant l'étape consistant à amener la qualité des chromatogrammes modélisés à être affichée sous la forme d'un diagramme de contours.

4. Procédé suivant l'une quelconque des revendications 1 à 3, comprenant l'étape consistant à produire le chromatogramme sous la forme d'un diagramme de lignes montrant les positions prédites des pics.

5. Procédé suivant l'une quelconque des revendications 1 à 4, comprenant l'étape consistant à sélectionner le critère de qualité comme étant la meilleure séparation d'ensemble des pics.

6. Procédé suivant l'une quelconque des revendications 1 à 4, comprenant l'étape consistant à sélectionner le critère de qualité comme étant la meilleure séparation d'ensemble d'un jeu partiel sélectionné du ou des pics.

7. Procédé suivant l'une quelconque des revendications 1 à 4, comprenant l'étape consistant à sélectionner le critère de qualité comme étant le temps pris pour que le ou les pics sélectionnés soient séparés.

8. Procédé suivant l'une quelconque des revendications précédentes, dans lequel dans l'étape b) dix analyses sont effectuées.

9. Procédé suivant l'une quelconque des revendications précédentes, dans lequel les pics de chaque chromatogramme sont identifiés et suivis par comparaison de leurs spectres avec ceux d'un jeu de pics de référence.

10. Procédé suivant la revendication 8, dans lequel les pics de référence sont dérivés d'un ou plusieurs des chromatogrammes de la pluralité mémorisés dans l'étape c).

11. Appareil de chromatographie en phase liquide comprenant :
a) une pluralité de sources de solvants;
b) des moyens pour proportionner et pomper le solvant;
c) une colonne de séparation;
d) des moyens d'admission d'échantillon;
e) un détecteur;
f) des moyens pour afficher un chromatogramme;
g) des moyens de contrôle pour permettre d'optimiser la composition de solvants pour une séparation d'échantillons donnée, ces moyens de contrôle comprenant;
h) des moyens pour recevoir et mémoriser les données représentant les solvants disponibles;
i) des moyens pour sélectionner séquentiellement des compositions de solvants en utilisant les solvants disponibles et pour exécuter une séparation chromatographique à l'aide de la composition de solvants sélectionnée;
j) des moyens pour mémoriser chacun des chromatogrammes produits séquentiellement;
k) des moyens pour détecter et étiqueter chacun des pics de chacun des chromatogrammes;
l) des moyens pour calculer à partir des chromatogrammes mémorisés la position des pics chromatographiques sur l'étendue de surface;
m) des moyens pour afficher une qualité chromatographique d'un point à un autre de la surface, et
n) des moyens pour sélectionner un point souhaité sur la surface et afficher un chromatogramme prédit simultanément avec l'affichage de la qualité chromatographique.

12. Appareil suivant la revendication 11, comprenant, en outre, des moyens pour recevoir et mémoriser des données représentant un plan isoéluotropique sélectionné, dans lequel les moyens i) sont agencés pour sélectionner des compositions de solvants définies par des points sélectionnés sur le plan isoéluotropique et les moyens m) sont agencés pour afficher la qualité chromatographique au sein du plan isoéluotropique.

13. Appareil suivant la revendication 11 ou 12, dans lequel les moyens m) sont agencés pour afficher la qualité chromatographique sous la forme d'un diagramme de contours.

14. Appareil suivant l'une quelconque des revendications 11 à 13, dans lequel les moyens n) sont agencés pour afficher le chromatogramme prédit sous la forme d'un diagramme de lignes montrant la position des pics.

15. Appareil suivant l'une quelconque des revendications 11 à 14, dans lequel le détecteur est un spectrophotomètre à série de diodes.

16. Appareil suivant l'une quelconque des revendications 11 à 15, dans lequel les moyens n) sont agencés pour étiqueter un ou plusieurs des pics du chromatogramme prédit affiché au moyen de son composé chimique.

17. Appareil suivant l'une quelconque des revendications 11 à 16, dans lequel les moyens n) sont agencés pour afficher une table des pics, la table des pics énumérant les composés chimiques d'un ou plusieurs pics.
